# EUROPÄISCHE PATENTANMELDUNG

(11) **EP 0 633 401 A1**
(43) Veröffentlichungstag der Anmeldung: **11.01.1995**
(21) Anmeldenummer: 94108665.4
(22) Anmeldetag: 07.06.1994
(51) Int. Cl.: F15B 11/02, F15B 13/042, B21D 24/14

(54) **Hydrozylinder, insbesondere zum Niederhalten eines Blechs auf einer Blechschere**

(30) Priorität: 09.06.1993 DE 4319148
(71) Anmelder: MANNESMANN REXROTH GmbH, D-97813 Lohr (DE)
(72) Erfinder: Reinert, Michael, D-97816 Lohr/Main (DE); Zorn, Hans-Jürgen, D-97753 Karlstadt-Wiesenfeld (DE)

(57) **Zusammenfassung**

Die Erfindung betrifft einen Hydrozylinder mit einem Gehäuse (10), mit einem eine Kolbenstange (32) und einen Kolben (31) umfassenden Kolbenteil (30) und einem im Gehäuse vorhandenen, vom Kolben (31) begrenzten Druckraum (60), der über einen mit einem Drosselorgan (50) veränderbaren Durchflußquerschnitt (61) mit einem Druckmittelanschluß (62) verbindbar ist. Entweder das Gehäuse- (10) oder das Kolbenteil (30) ist relativ zu einem Gestell fest angeordnet, während das andere dieser beiden Bauteile relativ zum Gestell bewegbar ist. Bei den bekannten Hydrozylindern setzt eine Verengung des Durchflußquerschnitts immer in einer bestimmten relativen Lage zwischen dem Gehäuse und dem Kolbenteil ein.

Es soll ein Hydrozylinder geschaffen werden, bei dem der Durchflußquerschnitt und damit die Geschwindigkeit des bewegbaren Bauteils in Abhängigkeit von der Lage eines äußeren Anschlags veränderbar ist.

Dies wird dadurch erreicht, daß das Drosselorgan (50) durch den äußeren Anschlag (70) beaufschlagbar am bewegbaren Bauteil (30) angeordnet, mit diesem bewegbar und nach einer Beaufschlagung durch den Anschlag (70) während einer weiteren Bewegung des bewegbaren Bauteils (30) auf den Anschlag (70) zu relativ zum bewegbaren Bauteil (30) verstellbar ist und daß sich der veränderbare Durchflußquerschnitt (61) zwischen dem Drosselorgan (50) und dem bewegbaren Bauteil (30) befindet.

## Beschreibung

Die Erfindung betrifft einen Hydrozylinder, der insbesondere zum Niederhalten eines Blechs auf einer Blechschere verwendet werden soll und der die Merkmale aus dem Oberbegriff des Anspruchs 1 aufweist.

In dem genannten Anwendungsfall soll ein Blech von einem oder mehreren Hydrozylindern auf dem Scherentisch festgehalten werden, damit es während des Schneidens nicht kippt und so ein unsauberer Schnitt vermieden wird. Bisher wird ein solches Blech meist von Niederhaltern auf den Scherentisch gedrückt, die von Federn gegen das Blech zu belastet sind und vom Messerbalken angehoben werden. Eine solche Lösung erfordert viel Zeit für die Bewegung der Niederhalter und einen relativ großen Scherenhub.

Als günstigere Lösung erscheint, als Niederhalter Hydrozylinder zu verwenden. Ein ungebremstes Auftreffen der Niederhalter auf das Werkstück bzw. auf den Scherentisch ist dabei mit einer lästigen Geräuschentwicklung verbunden. Dies läßt sich vermeiden, wenn die Geschwindigkeit der Niederhalter kurz vor dem Auftreffen auf das Gegenstück verlangsamt wird.

Es sind Hydrozylinder bekannt, die mit einer sog. Endlagendämpfung ausgestattet sind. Bei diesen Hydrozylindern wird die Geschwindigkeit des Kolbens langsamer, wenn er in eine Endlage einfährt. Grundsätzlich ist es denkbar, eine solche Endlagendämpfung auch bei einem Hydrozylinder zu verwenden, der als Niederhalter an einer Blechschere eingesetzt ist. Da die zu schneidenden Bleche nicht immer ganz eben, sondern häufig gewölbt sind und verschieden starke Bleche geschnitten werden sollen, müßte bei allen Niederhaltern die Dämpfung so bald einsetzen, daß auch bei den dicksten Blechen und den größten vorkommenden Wölbungen vor dem Auftreffen des Niederhalters auf das Blech die Abbremsung des Hydrozylinders schon eingesetzt hat. In vielen Fällen und für viele Niederhalter würde dies bedeuten, daß ein langer Resthub mit langsamer Geschwindigkeit viel Zeit erfordern würde. In Fällen, in denen die Breite des Blechs nicht der vollen Scherenlänge entspricht würden sich einige Niederhalter mit langsamer Geschwindigkeit bis auf den Scherentisch hinabbewegen, so daß viel Zeit verlorengehen würde. Die Schere darf nämlich erst dann schneiden, wenn sichergestellt ist, daß die Niederhalter das Werkstück einwandfrei fixieren. Dies ist bei einem parallelen Steuern mehrerer Niederhalter mit Hilfe eines Ventils erst der Fall, wenn alle Niederhalter an einem Anschlag anliegen und sich der gewünschte Druck aufgebaut hat.

Den Weg, den jeder Niederhalter von seiner angehobenen Endlage bis zum Auftreffen auf das Gegenstück zurücklegen muß, individuell für jeden Niederhalter zu erfassen und jeden Niederhalter individuell über ein ihm zugeordnetes Steuer- bzw. Regelventil abzubremsen, erscheint mit vertretbarem Aufwand nicht realisierbar.

Der Erfindung liegt also die Aufgabe zugrunde, einen Hydrozylinder, der insbesondere zum Niederhalten eines Blechs auf einer Blechschere verwendet werden soll und der die Merkmale aus dem Oberbegriff des Anspruches 1 aufweist, mit geringem Aufwand so auszubilden, daß sein relativ zu einem Gestell bewegbares Bauteil in Abhängigkeit von der Position eines äußeren Anschlags abgebremst wird und mit langsamer Geschwindigkeit auf den äußeren Anschlag trifft.

Diese Aufgabe wird mit einem Hydrozylinder gelöst, der die Merkmale aus dem Oberbegriff des Anspruches 1 besitzt und bei dem das Drosselorgan durch den äußeren Anschlag beaufschlagbar am bewegbaren Bauteil angeordnet, mit diesem Bauteil bewegbar und nach einer Beaufschlagung durch den Anschlag während einer weiteren Bewegung des bewegbaren Bauteils auf den Anschlag zu relativ zum bewegbaren Bauteil verstellbar ist und daß sich der veränderbare Durchflußquerschnitt zwischen dem Drosselorgan und dem bewegbaren Bauteil befindet.

Während bei bekannten Hydrozylindern mit einer Endlagendämpfung die Dämpfung in einer ganz bestimmten Position des Kolbens relativ zum Gehäuse einsetzt, weil das Drosselorgan in Form einer Dämpfungsbuchse fest am Kolben angeordnet ist und sich der veränderbare Durchflußquerschnitt zwischen der Dämpfungsbuchse und dem üblicherweise ruhenden Gehäuse befindet, ist bei einem erfindungsgemäßen Hydrozylinder die relative Lage zwischen Gehäuse und Kolben nicht für die Abbremsung des bewegbaren Bauteils maßgebend. Die Abbremsung setzt vielmehr früher oder später ein, je nachdem wie weit der äußere Anschlag von der Ausgangsposition des bewegbaren Bauteils des Hydrozylinders entfernt ist. Auch wenn mehrere erfindungsgemäße Hydrozylinder, z.B. wenn sie als Niederhalter auf einer Blechschere verwendet werden, parallel zueinander von einem einzigen Ventil gesteuert werden, wird jeder Hydrozylinder unabhängig von jedem anderen und individuell abgestimmt auf den Abstand zwischen ihm und dem Gegenstück abgebremst. Z.B. setzt für einen Niederhalter, der wegen einer begrenzten Breite des Bleches bis zum Scherentisch niederfährt, die Abbremsung später ein als für einen Niederhalter, der auf das Blech trifft. Die Zeit, die ersterer Niederhalter für seinen längeren Weg benötigt, ist deshalb nur geringfügig länger als die Zeit für letzteren Niederhalter, so daß eine kurze Taktzeit der Blechschere möglich ist.

Vorteilhafte Ausgestaltungen eines erfindungsgemäßen Hydrozylinders kann man den Unteransprüchen entnehmen.

Gemäß Anspruch 2 kann der Hydrozylinder einen kolbenstangenseitigen Druckraum und einen kolbenstangenabseitigen Druckraum aufweisen, wobei zum Halten eines Werkstücks der kolbenstangenabseitige Druckraum mit Druck beaufschlagt wird. Um einen auf eine Druckübersetzung zurückzuführenden sehr hohen Druck im kolbenstangenseitigen Druckraum zu vermeiden, ist nun gemäß Anspruch 2 vorgesehen, daß für die Abbremsung des bewegbaren Bauteils des Hydrozylinders für den Zufluß von Druckmittel in den kolbenstangenabseitigen Druckraum der Durchflußquerschnitt veränderbar ist.

Günstig ist es auch, wenn sich gemäß Anspruch 3 der Druckmittelanschluß am relativ zum Gestell festen Bauteil, also üblicherweise am Gehäuse des Hydrozylinders befindet. Man kann dann leicht auf Schläuche für den Anschluß des Hydrozylinders an ein Hydrosystem verzichten.

Das Drosselorgan soll zunächst eine schnelle Bewegung des bewegbaren Bauteils des Hydrozylinders ermöglichen, ehe der Durchflußquerschnitt verkleinert wird und damit die Abbremsung und der Übergang zu einer langsameren Geschwindigkeit beginnt. Das Drosselorgan ist deshalb nach dem Abheben des Niederhalters vom Werkstück wieder nach außen und weg von der mit ihm zusammenwirkenden Steuerkante zu bewegen. Diese Bewegung läßt sich gemäß Anspruch 5 dadurch herbeiführen, daß das Drosselorgan von dem Druck im Druckmittelanschluß nach außen hin beaufschlagbar ist. Es bewegt sich deshalb spätestens dann nach außen, wenn zu Beginn der Verschiebung des bewegbaren Bauteils auf das Gegenstück zu im Druckmittelanschluß ein Druck ansteht. Zusätzlich oder auch ohne einen das Drosselorgan beaufschlagenden Druck eines Druckmittels läßt sich eine Bewegung des Drosselorgans nach außen durch ein Federelement herbeiführen, das zwischen dem Drosselorgan und dem Kolben eingespannt ist. In diesem Fall bewegt sich das Drosselorgan nach außen schon beim Abheben des Niederhalters vom Werkstück und nimmt eine definierte Ruhelage auch dann ein, wenn im Druckmittelanschluß kein Druck ansteht.

In diesem Zusammenhang sei darauf hingewiesen, daß das Drosselorgan natürlich mit der Geschwindigkeit auf den äußeren Anschlag trifft, mit der sich das bewegbare Bauteil des Hydrozylinders unmittelbar vor Beginn der Abbremsung bewegt. Allerdings kann die Masse des Drosselorgans um ein Vielfaches geringer als die Masse des bewegbaren Bauteils gehalten werden, so daß seine kinetische Energie kleiner ist als die kinetische Energie eines gleich schnellen Kolbens oder Gehäuses des Hydrozylinders. Auch reicht die aufgrund des Druckes im Druckanschluß und des Federelements auf das Drosselorgan in Richtung auf das Werkstück zu wirkende Kraft nicht an die das bewegbare Bauteil, also üblicherweise den Kolben des Hydrozylinders beaufschlagende Kraft heran. Die Geräuschentwicklung ist deshalb wesentlich geringer als bei einem Aufschlag des Kolbens auf das Werkstück mit derselben Geschwindigkeit.

Die Unteransprüche 7 bis 11 beziehen sich auf Ausbildungen eines erfindungsgemäßen Hydrozylinders, die in erster Linie vorteilhafte konstruktive Einzelheiten bezüglich des Drosselorgans, seiner Anordnung im Kolben des Hydrozylinders und die Verbindung des Druckraums mit dem Druckmittelanschluß über den veränderbaren Durchflußquerschnitt betreffen.

Sofern sich der Druckmittelanschluß am relativ zum Gestell ruhenden Bauteil befindet, ist ein Übergang des Druckmittels vom ruhenden Bauteil in das bewegbare Bauteil notwendig, wenn Druckmittel vom Druckmittelanschluß in den Druckraum oder vom Druckraum zum Druckmittelanschluß gelangen soll. Diesen Übergang erhält man gemäß Anspruch 12 in einfacher Weise dadurch, daß das Gehäuse und der Kolben mit Hilfe eines Ansatzes am einen Teil und einer Aufnahme für den Ansatz am anderen Teil teleskopisch ineinandergreifen und daß in der Verbindung zwischen dem Druckmittelanschluß und dem Druckraum die Aufnahme für den Ansatz und eine axiale, in die Aufnahme mündende Bohrung in dem Ansatz liegen. Für eine besonders kurze Bauweise des Hydrozylinders ist es vorteilhaft, wenn sich der Ansatz am Gehäuse und die Aufnahme am Kolben befindet.

Die Konstruktion für den Übergang von Druckmittel vom Gehäuse zum Kolben kann es mit sich bringen, daß ein zweiter Druckraum vorhanden ist, der zwischen dem Druckmittelanschluß und dem veränderbaren Durchflußquerschnitt liegt und ein Druck in diesem zweiten Druckraum auf den Kolben eine Kraft in dieselbe Richtung wie ein Druck im ersten Druckraum erzeugt. Trotz einer Verringerung des Durchflußquerschnitts durch das Drosselorgan gelangt in diesen zweiten Druckraum Druckmittel noch ungehindert. Damit das bewegliche Bauteil trotzdem stark genug abgebremst wird, ist gemäß Anspruch 14 vorgesehen, daß die durch einen Druck im zweiten Druckraum auf den Kolben wirkende Kraft während eines gedrosselten Zulaufs von Druckmittel zum ersten Druckraum kleiner ist als eine auf den Kolben wirkende Kraft in die entgegengesetzte Richtung. Es ist denkbar, die Gegenkraft durch eine Feder zu erzeugen, die zwischen dem Kolben und dem Gehäuse eingespannt ist. Die Gegenkraft kann besser konstant gehalten werden und die Bewegung des Kolbens läßt sich besser steuern, wenn der Hydrozylinder gemäß Anspruch 15 kolbenstangenseitig einen ringförmigen, dritten Druckraum besitzt, der zumindest während eines gedrosselten Zulaufs von Druckmittel zum ersten Druckraum mit Druck beaufschlagbar ist. Selbst wenn der Druck im dritten Druckraum dem Druck im zweiten Druckraum entspricht, kann durch entsprechende Wahl der wirksamen Flächen die Gegenkraft größer als die Kraft gemacht werden, die durch den Druck im zweiten Druckraum erzeugt wird.

In zweckmäßiger und an sich bekannter Weise ist gemäß Anspruch 16 der erste Druckraum im Bypass zu dem veränderbaren Durchflußquerschnitt über eine vorzugsweise einstellbare Drossel mit dem Druckmittelanschluß verbunden. Somit kann der Durchflußquerschnitt ganz geschlossen werden, woraufhin der anstehende Druck und der eingestellte Drosselquerschnitt die weitere Geschwindigkeit des bewegbaren Bauteils des Hydrozylinders bestimmt. Beim Zurückfahren des bewegbaren Bauteils vom Werkstück sind vorteilhafterweise die verschiedenen Drosselquerschnitte nicht wirksam. Deshalb ist gemäß Anspruch 17 vorgesehen, daß der erste Druckraum im Bypass zu dem veränderbaren Durchflußquerschnitt über ein Rückschlagventil mit dem Druckmittelanschluß verbindbar ist.

Ein Ausführungsbeispiel eines erfindungsgemäßen Hydrozylinders ist in den Zeichnungen dargestellt. Anhand der Figuren dieser Zeichnungen wird die Erfindung nun näher erläutert.

Es zeigen
- Figur 1: das Ausführungsbeispiel in schematischer Weise und seine Druckmittelversorgung und

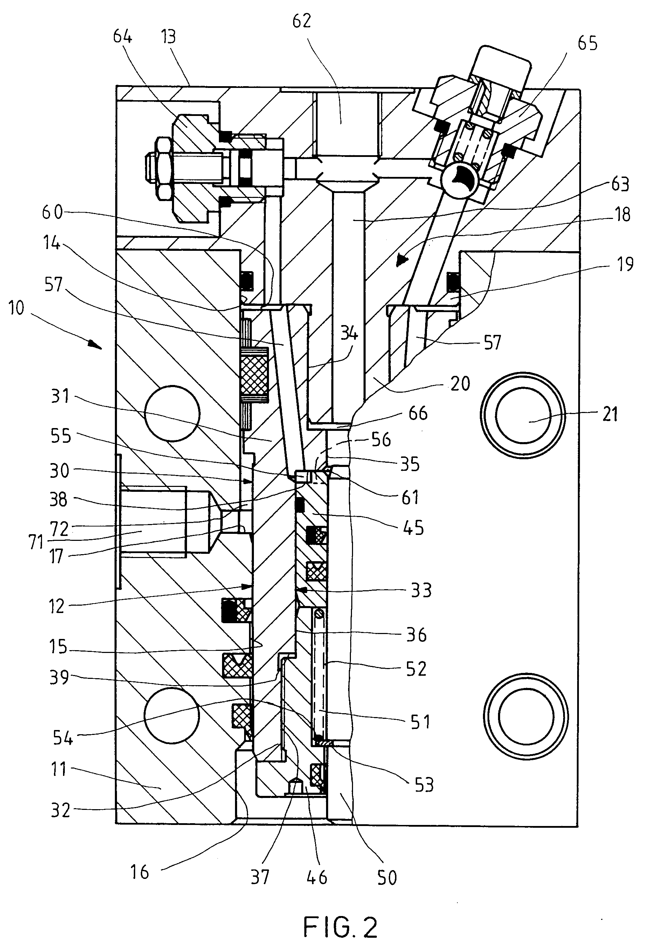

- Figur 2: das Ausführungsbeispiel in seiner konstruktiven Ausgestaltung.

Der gezeigte Hydrozylinder besitzt ein zweiteiliges Zylindergehäuse 10 bestehend aus einem Gehäusemantel 11 mit einer durchgehenden, gestuften axialen Bohrung 12 und aus einem Gehäuseboden 13, der an eine Stirnseite des Zylindergehäuses 10 angeschraubt ist und die Bohrung 12 an dieser Stirnseite verschließt. An der Bohrung 12 kann man im wesentlichen drei Bohrungsabschnitte 14, 15 und 16 unterscheiden. Der Bohrungsabschnitt 14 beginnt an der Stirnseite des Gehäusemantels 11, auf die der Gehäuseboden 13 aufgeschraubt ist und endet etwa mittig des Gehäusemantels 11. Dort geht er in einer senkrecht zur Achsrichtung angeordneten Stufe 17 in den Bohrungsabschnitt 15 über, dessen Durchmesser geringfügig kleiner als der Durchmesser des Bohrungsabschnitts 14 ist. Zur zweiten Stirnseite des Gehäusemantels 11 hin geht der Bohrungsabschnitt 15 in einer konischen Stufe in den Bohrungsabschnitt 16 über, der wieder einen größeren Durchmesser besitzt.

Der Gehäuseboden 13 greift mit einem gestuften zylindrischen Ansatz 18 in den Bohrungsabschnitt 14 hinein, wobei der Ansatz 18 in einem ersten Abschnitt 19 denselben Durchmesser wie der Bohrungsabschnitt 14 hat. Ein noch weiter in die Bohrung 12 hineinragender, zweiter Abschnitt 20, der zentrisch am ersten Abschnitt 19 sitzt, weist einen wesentlich kleineren Durchmesser als der Bohrungsabschnitt 14 auf.

Durch den Gehäusemantel 11 gehen mehrere Bohrungen 21 hindurch, die zur Befestigung des Hydrozylinders an einem Gestell dienen. Das Gehäuse 10 ist also relativ zu diesem Gestell in Ruhe.

In der Bohrung 12 des Zylindergehäuses 10 ist ein Kolbenteil 30 bewegbar geführt, dessen Außendurchmesser in einem den eigentlichen Kolben darstellenden Abschnitt 31 dem Durchmesser des Bohrungsabschnitts 14 entspricht, wobei der Kolben 31 axial kürzer ist als der zwischen der Stufe 17 und dem Abschnitt 19 des Ansatzes 18 freibleibende Bereich des Bohrungsabschnitts 14. In einem zweiten Abschnitt 32, der auf der dem Gehäuseboden 13 abgewandten Seite des Kolbens 31 von diesem wegragt und den man als Kolbenstange bezeichnen kann, entspricht der Außendurchmesser des Kolbenteils 30 dem Durchmesser des Bohrungsabschnitts 15.

Das Kolbenteil 30 ist mit einer durchgehenden, zentralen, mehrfach gestuften Bohrung 33 versehen. Ein erster, zum Gehäuseboden 13 hin offener Abschnitt der Bohrung 33 bildet eine Aufnahme 34 für den Abschnitt 20 des Ansatzes 18 und stimmt in seinem Durchmesser mit dem Durchmesser des Abschnitts 20 überein. Die axiale Länge ist geringfügig größer als diejenige des Ansatzabschnittes 20. Von der Aufnahme 34 geht die Bohrung 33 in einer Stufe in einen zweiten Bohrungsabschnitt 35 über, dessen Durchmesser kleiner als der Durchmesser der Aufnahme 34 ist. An den Bohrungsabschnitt 35 schließt sich ein Bohrungsabschnitt 36 mit einem größeren Durchmesser an. Dem Abschnitt 36 schließlich folgt ein Abschnitt 37, in dem der Durchmesser der Bohrung 33 nochmals vergrößert ist. Die Bohrungsabschnitte 35 und 36 sowie 36 und 37 gehen jeweils in einer in einer radialen Ebene liegenden Stufe 38 bzw. 39 ineinander über.

In den Bohrungsabschnitt 36 ist eine Buchse 45 eingeschoben und in den Bohrungsabschnitt 37 eine Buchse 46 eingeschraubt, die die Buchse 45 axial beaufschlagt und an der Stufe 38 zwischen den Bohrungsabschnitten 35 und 36 hält. Der Innendurchmesser der Buchse 45 stimmt mit dem Durchmesser des Bohrungsabschnitts 35 überein. Die Buchse 45 führt ein Drosselorgan in Form eines Drosselstiftes 50, den eine Schraubendruckfeder 51, die ihn im Bereich einer inneren Ausdrehung 52 in der Buchse 46 umgibt und sich an der Buchse 45 abstützt, über einen durch einen Sicherungsring 53 gebildeten Außenbund gegen eine Stufe 54 an der Buchse 46 zu drücken sucht. Wenn der Sicherungsring 53 an der Stufe 54 anliegt, ragt der Drosselstift 50 mit seinem einen Ende über die Buchse 46 und damit über die Kolbenstange 32 vor. Das andere Ende des Drosselstiftes 50, das leicht konisch zuläuft, befindet sich im Bereich der Stufe 38 zwischen den beiden Bohrungsabschnitten 35 und 36.

An ihrer der Stufe 38 zugewandten Stirnseite besitzt die Buchse 45 außen eine Eindrehung 55 und in dem innerhalb der Eindrehung vorhandenen Bund mehrere zur Stufe 38 hin offene Radialnuten 56. Im Bereich der Eindrehung 55 münden in den Bohrungsabschnitt 36 mehrere Bohrungen 57, die sich im wesentlichen axial des Kolbenteils 30 erstrecken und von der dem Gehäuseboden 13 zugewandten Stirnseite des Kolbens 31 ausgehen. Über die Radialnuten 56, die Eindrehung 55 und die Bohrungen 57 ist eine Verbindung zwischen einem sich zwischen dem Kolben 31 und dem Gehäuseboden 13 befindlichen, kolbenstangenabseitigen ersten Druckraum 60 und dem Abschnitt 35 der Bohrung 33 möglich. Innerhalb dieser Verbindung ist der Durchflußquerschnitt 61 zwischen der Stufe 38 und dem Drosselstift 50 veränderbar, wobei der Durchflußquerschnitt bis auf null abnimmt, wenn sich der Drosselstift 50 nach innen bewegt.

Der Gehäuseboden 13 ist zentral mit einem Druckmittelanschluß 62 versehen, von dem eine axiale Bohrung 63 ausgeht, die durch den Ansatz 18 des Gehäusebodens 13 hindurchführt und in den Abschnitt 34 der Bohrung 33 mündet. Über die Bohrung 63, die Bohrungsabschnitte 34 und 35, den Durchflußquerschnitt 61, die Radialnuten 56, die Eindrehung 55 und die Bohrungen 57 ist also eine Verbindung zwischen dem Druckraum 60 und dem Druckmittelanschluß 62 herstellbar. Jeweils im Bypass zu dieser Druckmittelleitung liegen zwischen dem Druckmittelanschluß 62 und dem Druckraum 60 eine von Hand einstellbare Drossel 64 und ein Rückschlagventil 65, das zum Druckraum 60 hin sperrt. Die Bypassleitungen gehen durch den Gehäuseboden 13 hindurch und münden von diesem aus unmittelbar in den Druckraum 60.

Ein Druck in dem Druckraum 60 erzeugt mit der angrenzenden Fläche des Kolbens 31 auf diesen eine Kraft, die das Kolbenteil 30 aus dem Gehäuse 10 herauszuschieben sucht. Eine gleich gerichtete Kraft erzeugt ein Druck in einem zweiten Druckraum 66, der sich vor dem Ansatz 20 des Gehäusebodens 13 in der Bohrung 33 des Kolbenteils 30 befindet. Der Druck im Druckraum 66 kann verschieden von dem Druck im Druckraum 60 sein. Die wirksame Fläche entspricht, solange der Drosselstift 50 die Buchse 46 beaufschlagt, der Fläche des Ansatzes 20. Hat der Drosselstift 50 dagegen, weil er gegen einen äußeren Anschlag 70, z.B. ein zu schneidendes Blech gestoßen ist, von der Buchse 46 abgehoben, so entspricht die wirksame Fläche nur noch der Querschnittsflächendifferenz zwischen den Bohrungsabschnitten 34 und 35.

Ein zweiter Druckmittelanschluß 71 des Hydrozylinders befindet sich im Gehäusemantel 11 und ist mit einem dritten Druckraum 72 verbunden, der sich axial zwischen dem Kolben 31 und der Stufe 17 des Gehäusemantels 11 befindet. Ein Druck im Druckraum 72 erzeugt eine Kraft auf das Kolbenteil 30, die den bisher erwähnten Kräften entgegengerichtet ist. Die dem Druckraum 72 zugewandte, wirksame Fläche des Kolbens 31 ist größer als die Querschnittsfläche des Ansatzes 20 und damit auf jeden Fall größer als die Differenz der Querschnittsflächen der Bohrungsabschnitte 34 und 35, so daß die durch den Druck im Druckraum 72 erzeugte Kraft größer als die durch den Druck im Druckraum 66 erzeugte Kraft ist, wenn beide Drücke gleich groß sind. Sitzt der Drosselstift 50 auf dem Anschlag auf, so wirkt in die gleiche Richtung wie eine durch den Druck im Druckraum 72 erzeugte Kraft auch eine durch die Feder 51 erzeugte Kraft.

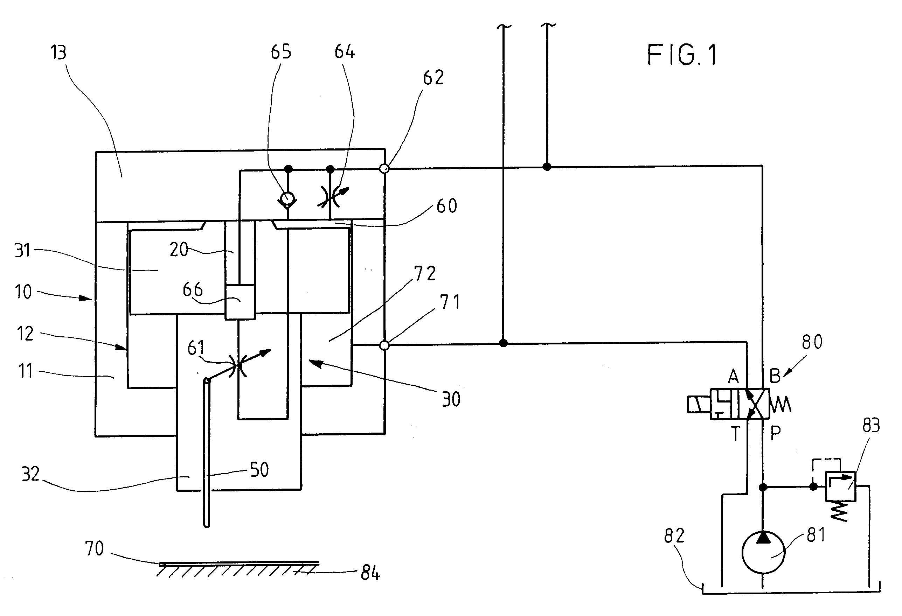

Wie die Figur 1 zeigt, kann ein erfindungsgemäßer Hydrozylinder parallel zu mehreren gleichartigen Zylindern an ein 4/2-Wegeventil 80 angeschlossen sein, das z.B. aufgrund der Kraft einer Feder eine Ruhelage einnimmt und durch einen Elektromagneten aus dieser Ruhelage in die zweite Schaltstellung verstellt werden kann. Das Wegeventil 80 besitzt einen Eingang P, der mit der Druckseite einer Pumpe 81 verbunden ist, und einen Eingang T, der zur einem Tank 82 führt. Ein Verbraucheranschluß A ist mit dem jeweiligen Druckanschluß 71 der Hydrozylinder und ein Verbraucherausgang B mit dem Druckanschluß 62 der Hydrozylinder verbunden. In der zweiten Schaltstellung des Ventils 80 sind die beiden Verbraucherausgänge A und B untereinander und mit dem Eingang P verbunden. In der Ruhestellung des Ventils 80 besteht jeweils eine Verbindung zwischen dem Pumpenanschluß P und dem Verbraucherausgang A sowie zwischen dem Tankanschluß T und dem Verbraucherausgang B.

Der Systemdruck ist durch ein Druckbegrenzungsventil 83 auf einen bestimmten Wert begrenzt.

In der in Figur 1 gezeigten Position des Wegeventils 80 ist der Druckraum 72 mit der Druckseite der Pumpe 81 verbunden. Der Druckraum 60 und der Druckraum 66 aller Hydrozylinder 10 sind zum Tank hin entlastet. Das bewegliche Bauteil der Hydrozylinder 10 nämlich das Kolbenteil 30 befindet sich in seiner oberen Endlage, die durch sein Anstoßen an den Zylinderboden 13 bestimmt ist. Der Drosselstift 50 ragt aus der Kolbenstange 32 heraus. Der Durchflußquerschnitt 61 hat sein größtes Maß. Zum Herunterfahren des Kolbenteils 30 auf das Blech 70 wird das Wegeventil 80 mit Hilfe des Elektromagneten in seine andere Schaltstellung gebracht, in der alle Druckräume miteinander und mit der Pumpe 81 verbunden sind. Das von der Pumpe 81 geförderte Druckmittel und aus dem Druckraum 72 herausfließendes Druckmittel gelangt über den Druckmittelanschluß 62 und den Durchflußquerschnitt 61 in den Druckraum 60. In einer bestimmten Entfernung der Kolbenstange 32 vom Blech 70 trifft der Drosselstift 50 auf das Blech 70 und schließt den Durchflußquerschnitt 61. Öl kann jetzt nur noch über die Drossel 64 in den Druckraum 60 gelangen. Wegen der Drossel 64 baut sich zwischen dieser und der Pumpe 81, also auch im Druckraum 72 der am Druckbegrenzungsventil 83 eingestellte Druck auf. Derselbe Druck herrscht im Druckraum 66, wobei sich, da der Drosselstift 50 am Blech 70 abgestützt ist, die wirksame Fläche aus der Querschnittsdifferenz zwischen den Bohrungsabschnitten 34 und 35 ergibt. Im Druckraum 60 baut sich ein solcher Druck auf, daß die Summe der Kräfte, die auf das Kolbenteil 30 in Richtung auf das Blech 70 zu wirken und die durch die Drücke in den Druckräumen 60 und 66 sowie die entsprechenden Wirkflächen erzeugt werden, so groß sind, wie die Summe der Kräfte, die in Gegenrichtung wirken und die durch den Druck im Druckraum 72 und die entsprechende Wirkfläche am Kolben 31, durch die Feder 51 und durch Reibung erzeugt werden. Weil die Wirkfläche des Druckraumes 72 teilweise schon durch die Wirkfläche des Druckraumes 66 ausgeglichen wird, weil die Wirkfläche des Druckraumes 60 wesentlich größer als die Wirkfläche des Druckraumes 72 ist und weil die Federkräfte und Reibkräfte nur gering sind, ist der Druck im Druckraum 60 wesentlich kleiner als der Druck in den Druckräumen 66 und 72 und in der vom Ventil 80 zur Drossel 64 führenden Leitung. Bei der gegebenen Druckdifferenz an der Drossel 64 bestimmt nun deren Einstellung die Druckmittelmenge, die nach dem Schließen des Durchflußquerschnitts 61 in den Druckraum 60 gelangt. Also bestimmt die Einstellung der Drossel 64 auch die Geschwindigkeit, mit der die Kolbenstange 32 auf das Blech 70 trifft. Der Weg vom Auftreffen des Drosselstiftes 50 auf das Blech 70 bis zum Auftreffen der Kolbenstange 32 hängt dabei nicht von der Lage des Anschlags, im vorliegenden Fall des Blechs 70, relativ zum Hydrozylinder 10 ab.

Nach dem Auftreffen der Kolbenstange 32 auf das Blech 70 steigt auch im Druckraum 60 der Druck auf den am Druckbegrenzungsventil 83 eingestellten Wert an. Die schon geschilderten Größenverhältnisse unter den Wirkflächen führen dazu, daß das Blech 70 auf einen Scherentisch 84 gepreßt wird.

Zum Hochfahren des Kolbenteils 30 wird der Elektromagnet 83 von der Stromquelle getrennt, so daß das Ventil 80 wieder in seine in Figur 1 gezeigte Ausgangsstellung zurückkehrt. Das Kolbenteil 30 fährt nach oben, wobei das Öl aus dem Druckraum 60 verdrängt wird. Die Druckfeder 51 sorgt dafür, daß sich der Durchflußquerschnitt 61 schon nach einem kurzen Weg des Kolbenteils 30 vom Blech 70 weg zu öffnen beginnt und bald ganz offen ist. Druckmittel wird deshalb auch nach einem kurzen Weg auch über den Durchflußquerschnitt 61 aus dem Druckraum 60 in den Tank 82 verdrängt.

Grundsätzlich erscheint es auch möglich, den Druckraum 72 dauernd unter einem weitgehend konstanten Druck zu halten, indem er z.B. an einen Hydrospeicher angeschlossen ist. Dann wird sich in den Druckräumen 60 und 66 schon beim schnellen Herunterfahren des Kolbenteils 30 ein gewisser Druck aufbauen.

Bei beiden Anschlußmöglichkeiten für den Hydrozylinder erscheint es möglich, auf die Feder 51 zu verzichten, da ein Druck im Druckraum 66 immer dafür sorgen wird, daß der Drosselstift 50 bis zum Anschlag 54 aus dem Kolbenteil 30 herausgefahren ist, wenn sich das Kolbenteil 30 nach unten zu bewegen beginnt. Allerdings verbleibt der Drosselstift 50 beim Hochfahren des Kolbenteils 30 u.U. in der eingeschobenen Stellung, so daß der Durchflußquerschnitt 61 geschlossen ist und alles Druckmittel aus dem Druckraum 60 über das Rückschlagventil 65 verdrängt wird.

## Patentansprüche

1. Hydrozylinder, insbesondere zum Niederhalten eines Blechs auf einer Blechschere, mit einem Gehäuse (10), mit einem eine Kolbenstange (32) und einem Kolben (31) umfassenden Kolbenteil (30) und mit einem im Gehäuse vorhandenen, vom Kolben (31) begrenzten Druckraum (60), der über einen mit einem Drosselorgan (50) veränderbaren Durchflußquerschnitt (61) mit einem Druckmittelanschluß (62) verbindbar ist, wobei entweder das Gehäuse (10) oder das Kolbenteil (30) relativ zu einem Gestell fest und das andere dieser beiden Bauteile relativ zum Gestell bewegbar ist, **dadurch gekennzeichnet**, daß das Drosselorgan (50) durch einen äußeren Anschlag (70) beaufschlagbar am bewegbaren Bauteil (30) angeordnet, mit diesem bewegbar und nach einer Beaufschlagung durch den Anschlag (70) während einer weiteren Bewegung des bewegbaren Bauteils (30) auf den Anschlag (70) zu relativ zum bewegbaren Bauteil (30) verstellbar ist und daß sich der veränderbare Durchflußquerschnitt (61) zwischen dem Drosselorgan (50) und dem bewegbaren Bauteil (30) befindet.

2. Hydrozylinder nach Anspruch 1, **dadurch gekennzeichnet**, daß er einen kolbenstangenseitigen Druckraum (72) und einen kolbenstangenabseitigen Druckraum (60) aufweist und daß für den Zufluß von Druckmittel in den kolbenstangenabseitigen Druckraum (60) der Durchflußquerschnitt (61) veränderbar ist.

3. Hydrozylinder nach Anspruch 1 oder 2, **dadurch gekennzeichnet**, daß sich der Druckmittelanschluß (62) am relativ zum Gestell festen Bauteil (10) befindet.

4. Hydrozylinder nach einem vorhergehenden Anspruch, **dadurch gekennzeichnet**, daß das Gehäuse (10) relativ zum Gestell fest ist.

5. Hydrozylinder nach einem vorhergehenden Anspruch, **dadurch gekennzeichnet**, daß das Drosselorgan (50) von dem Druck im Druckmittelanschluß (62) nach außen hin beaufschlagbar ist.

6. Hydrozylinder nach einem vorhergehenden Anspruch, **dadurch gekennzeichnet**, daß das Drosselorgan (50) nach außen hin von einem zwischen dem Drosselorgan (50) und dem Kolbenteil (30) eingespannten Federelement (51) beaufschlagt ist.

7. Hydrozylinder nach einem vorhergehenden Anspruch, **dadurch gekennzeichnet**, daß das Drosselorgan (50) ein axial in einer vorzugsweise zentralen Aufnahme (33) des Kolbenteils (30) angeordneter und axial über das Kolbenteil (30) vorstehender Drosselstift mit einer Wegbegrenzung (54) nach außen ist, daß von der Aufnahme (33) ein Kanal (56, 55, 57) durch das Kolbenteil (30) in den Druckraum (60) führt und daß durch den Drosselstift (50) der Durchflußquerschnitt (61) zwischen dem Kanal (56, 55, 57) und der Aufnahme (33) veränderbar ist.

8. Hydrozylinder nach Anspruch 7, **dadurch gekennzeichnet**, daß das Kolbenteil (30) mit einer gestuften Bohrung (33) versehen ist, innerhalb derer sich der Drosselstift (50) befindet und daß der veränderbare Durchflußquerschnitt (61) zwischen dem Drosselstift (50) und der Vorderkante einer Stufe (38) der Bohrung (33) gebildet ist.

9. Hydrozylinder nach Anspruch 8, **dadurch gekennzeichnet**, daß in die Bohrung (33) eine auf der Stufe (38) aufsitzende, den Drosselstift (50) umgebende Buchse (45) eingesetzt ist, die an ihrer der Stufe (38) zugewandten Stirnseite außen eine Eindrehung (55) und in dem innerhalb der Eindrehung (55) vorhandenen Bund wenigstens eine zur Stufe (38) der Bohrung (33) hin offene Quernut (56) besitzt.

10. Hydrozylinder nach Anspruch 9, **dadurch gekennzeichnet**, daß ein Kanalabschnitt (57) radial außerhalb des Bundes der Buchse (45) in die Eindrehung (55) mündet.

11. Hydrozylinder nach Anspruch 9 oder 10, **dadurch gekennzeichnet**, daß sich in der Bohrung (33) vor der ersten an der Stufe (38) anliegenden Buchse (45) eine zweite Buchse (46) befindet, daß vorzugsweise die zweite Buchse (46) axial an der ersten Buchse (45) anliegt und daß in der zweiten Buchse (46) eine Wegbegrenzung (54) für den Drosselstift (50) vorgesehen ist, daß zwischen der Wegbegrenzung (54) und der der ersten Buchse (45) zugewandten Stirnseite der zweiten Buchse (46) der Innendurchmesser der zweiten Buchse (46) größer als der Durchmesser des Drosselstiftes (50) ist und daß sich in dem Freiraum zwischen dem Drosselstift (50) und der zweiten Buchse (46) das den Drosselstift (50) nach außen beaufschlagende Federelement (51) befindet, das zwischen der ersten Buchse (45) und einem Außenbund (53) des Drosselstifts (50) eingespannt ist.

12. Hydrozylinder nach einem der Ansprüche 3 bis 11, **dadurch gekennzeichnet**, daß das Gehäuse (10) und das Kolbenteil (30) mit Hilfe eines Ansatzes (20) am einen Teil (10) und einer Aufnahme (34) für den Ansatz (20) am anderen Teil (30) teleskopisch ineinandergreifen und daß in der Verbindung zwischen dem Druckmittelanschluß (62) und dem Druckraum (60) die Aufnahme für den Ansatz (20) und eine axiale, in die Aufnahme (34) mündende Bohrung (63) in dem Ansatz (20) liegen.

13. Hydrozylinder nach Anspruch 12, **dadurch gekennzeichnet**, daß sich der Ansatz (20) am Gehäuse (10) und die Aufnahme (34) am Kolbenteil (30) befindet.

14. Hydrozylinder nach einem vorhergehenden Anspruch, **dadurch gekennzeichnet**, daß ein zweiter Druckraum (66) vorhanden ist, der zwischen dem Druckmittelanschluß (62) und dem veränderbaren Durchflußquerschnitt (61) liegt, daß ein Druck im zweiten Druckraum (66) auf das Kolbenteil (30) eine Kraft in dieselbe Richtung wie ein Druck im ersten Druckraum (60) erzeugt, und daß diese Kraft während eines gedrosselten Zulaufs von Druckmittel zum ersten Druckraum (60) gleich oder kleiner ist als eine auf das Kolbenteil (30) wirkende Kraft in die entgegengesetzte Richtung.

15. Hydrozylinder nach Anspruch 14, **dadurch gekennzeichnet**, daß kolbenstangenseitig ein ringförmiger, dritter Druckraum (72) vorhanden ist, der zumindest während eines gedrosselten Zulaufs von Druckmittel zum ersten Druckraum (60) mit Druck beaufschlagbar ist.

16. Hydrozylinder nach einem vorhergehenden Anspruch, **dadurch gekennzeichnet**, daß der erste Druckraum (60) im Bypass zu dem veränderbaren Durchflußquerschnitt (61) über eine vorzugsweise einstellbare Drossel (64) mit dem Druckmittelanschluß (62) verbindbar ist.

17. Hydrozylinder nach einem vorhergehenden Anspruch, **dadurch gekennzeichnet**, daß der erste Druckraum (60) im Bypass zu dem veränderbaren Durchflußquerschnitt (61) über ein Rückschlagventil (65) mit dem Druckmittelanschluß (62) verbindbar ist.
